# EUROPEAN PATENT APPLICATION

(11) **EP 2 105 458 A1**
(43) Date of publication of application: **30.09.2009**
(21) Application number: 08102951.4
(22) Date of filing: 27.03.2008
(51) Int. Cl.: C08K 5/521, H01B 1/12, C08L 65/00

(54) **Dispersable polythiophene composition.**

(71) Applicant: AGFA-GEVAERT, 2640 Mortsel (BE)
(72) Inventor: Louwet, Frank, 2640, Mortsel (BE)

(57) **Abstract**

A freeze-dried composition comprising a polyanion, a polymer or copolymer of a substituted or unsubstituted thiophene and mono- or diesterified phosphoric acid surfactant; an aqueous or organic solvent solution or dispersion and an ink comprising the above composition; and a method for making an antistatic or electroconductive layer comprising the steps of:
- preparing an aqueous or an organic solvent solution or dispersion of the freeze-dried composition, and
- applying the dispersion or solution to an object.

## Description

### Technical field of the invention

The present invention relates to a freeze-dried composition comprising a polyanion, a surfactant and a polymer or copolymer of a substituted or unsubstituted thiophene. The present invention also relates to the use of such a composition for the preparation of a solution, dispersion, paste or ink thereof, and to their use to impart conductivity or anti-static properties to solid supports.

### Background of the invention

The preparation of polythiophenes and dispersions thereof for use in antistatic coatings has been described in the literature e.g. 'Handbook of Organic Conductive Molecules and Polymers', ed. H.S. Nalwa, J. Wiley & Sons, 1997. Polythiophenes have conductive properties.

In large scale methods for preparing aqueous dispersions of a latex comprising a polyanion and a polymer or copolymer of a substituted or unsubstituted thiophene, the solid content of the aqueous dispersions is limited to only a few percent, due to production reasons such as the need for ultrafiltration, the viscosity of the dispersion etc. It should be noted that such dispersions are often erroneously referred to as solutions due to the very small particle size, i.e. 20 to 50 nm, of the polythiophene/polyanion latex. Shipment of such dilute dispersions is expensive and cumbersome in view of the high volume and weight associated therewith.

For instance, PEDOT, i.e. poly(3,4-ethylenedioxythiophene) in combination with PSS (PSS as used in the present disclosure stands for poly(styrene sulfonic acid) or poly(styrene sulfonate)), is produced industrially as an aqueous dispersion with about 1 wt% of PEDOT/PSS. However many potential applications for PEDOT/PSS (polymers or co-polymers of a substituted or unsubstituted thiophene) require a nonaqueous dispersion in which the concentration of water is as low as possible, while retaining or increasing the concentration of thiophene polymers or co-polymers. Various methods such as e.g. simple evaporation of the water (WO99/34371), dehydratation by dialysis (WO02/42352), azeotropic distillation (WO 02/072660), flash evaporation (WO 03/087222) and solvent addition followed by evaporation of the water (WO 03/48228, WO 03/048229) have been investigated to obtain these concentrated dispersions.

Freeze-drying has been developed as a method for both preserving the quality and increasing the transportability, e.g. in space travel, expeditions and military campaigns, of perishable organic materials such as food, flavours, aromas, blood products and pharmaceutical formulations. Since the 1960's it has been applied to more than 400 different kind of foods from meat to fruits and vegetables. This background is reflected in a definition of freeze-drying (or lyophilization process) given by T. A. Jennings and H. Duan in 1995 in the Journal of Parenteral Science and Technology, volume 49, no. 6 pp. 272-282, as 'a stabilising process in which a substance is first frozen and then the quantity of solvent is reduced, first by sublimation and then by desorption to values that will no longer support biological activity or chemical reactions'.

WO02/0075 discloses the use of freeze-drying for producing dispersible polythiophene compositions. It also discloses the use of surfactants in the redispersible or soluble product. In particular the following surfactants are mentioned as being suitable:

**Table 1:**

| | |
|---|---|
| Surfactant Nr 01 = | perfluoro-octanoic acid ammonium salt, available as a 30% solution; |
| Surfactant Nr 02 = | MARLON™ A365, supplied as a 65% concentrate of a sodium alkyl-phenylsulfonate by HOLS; |
| Surfactant Nr 03 = | AKYPO™ OP80, supplied as an 80% concentrate of an octyl-phenyl-oxy-polyethyleneglycol(EO 8)acetic acid by CHEMY; |
| Surfactant Nr 04 = | ARKOPAL™ N060 (previously HOSTAPAL™ W), a nonylphenylpolyethylene-glycol from HOECHST; |
| Surfactant Nr 05 = | ZONYL™FSO 100, a block copolymer of polyethyleneglycol and polytetrafluoroethene with the structure: F(CF₂CF₂)_{y}CH₂CH₂O(CH₂CH₂O)ₓH, where x = 0 to ca. 15 and y = 1 to ca. 7 from DUPONT, supplied as a 5 wt.% solution; |
| Surfactant Nr 06 = | HOSTAPAL™ B, a sodium trisalkylphenyl- polyethyleneglycol(EO 7-8)sulphate from HOECHST, supplied as a 50% concentrate; |
| Surfactant Nr 07 | = ARKOPON™ T, a sodium salt of N-methyl-N-2-sulfoethyl-oleylamide from HOECHST, supplied as a 40% concentrate; |
| Surfactant Nr 08 = | MERSOLAT™H76, a sodium pentadecylsulfonate from BAYER, supplied as a 76% concentrate; |
| Surfactant Nr 09 = | SURFINOL™485, an ethoxylated acetylenic diol surfactant from Air Products. |

WO02/00759 discloses that if freeze-drying is applied to an aqueous dispersion of a latex comprising a polyanion and a copolymer or polymer of a substituted or unsubstituted thiophene, a sponge-like or wool-like powder is produced which can be redispersed rapidly in water or an organic solvent so as to obtain a coating dispersion or solution (optionally adding other ingredients) without leaving a coarse fraction behind. The rapidity of dispersion in water or an organic solvent is an important factor. There is still a need in the art for new and alternative dispersible compositions comprising polythiophene. In particular, there is still a need for compositions comprising polythiophene which can be dispersed rapidly in water or an organic solvent with a minimal expenditure of thermal and/or mechanical energy.

### Summary of the invention

It is an object of the present invention to provide suitable compositions comprising polythiophene and methods for their production. An advantage of the present invention is that it can provide compositions comprising polythiophene and methods for their production which allow for rapid dispersion of the compositions in an aqueous or organic solvent with minimal expenditure of thermal and/or mechanical energy. An advantage of some embodiments is that they can show superior qualities when compared to the compositions of the prior art. The above-identified object is met by the methods and products of the present invention.
In particular, the above-identified object is met by the first aspect of the present invention which relates to a freeze-dried composition comprising:
- a polyanion,
- a polymer or copolymer of a substituted or unsubstituted thiophene, and
- a surfactant, wherein the surfactant comprises a mono- or diesterified phosphoric acid or a mixture thereof, or a partially neutralized salt thereof.
In a preferred embodiment of the first aspect of the present invention, the mono- or diesterified phosphoric acid may be a compound of the general formula (III), 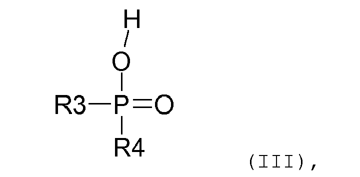 wherein
R3 is a hydroxy group or -(OCH₂)ₙOR5,
R4 is a hydroxy group or -(OCH₂)ₘOR6,
n is 0,1, 2, 3, 4, 5, 6, 7, 8, 9, 10, 11, 12, 13, 14, 15, 16, 17, 18, 19 or 20,
m is 0,1, 2, 3, 4, 5, 6, 7, 8, 9, 10, 11, 12, 13, 14, 15, 16, 17, 18, 19 or 20,
R5 and R6 are each independently of one another a hydrocarbon group, unsubstituted or substituted, branched or linear, cyclic, non-cyclic or heterocyclic, saturated or unsaturated, aromatic, non-aromatic or heteroaromatic comprising 8, 9, 10, 11, 12, 13, 14, 15, 16, 17, 18, 19, 20, 21, 22, 23, 24, 25, 26, 27, 28, 29 or 30 carbon atoms,
with the proviso that both R3 and R4 are not hydroxy groups simultaneously.

In a further embodiment of the first aspect of the present invention, the mono- or diesterified phosphoric acid may be selected from the group consisting of mono- and di-[tallowyl polyglycolether (6 EO)]phosphate as well as mixtures thereof (S1), mono- and di-[oleyl polyglycolether (7 EO)]phosphate as well as mixtures thereof (S2), mono- and di-[isotridecyl polyglycolether (3 EO)]phosphate) as well as mixtures thereof (S7), mono- and dilauryl phophates as well as mixtures thereof (S6), mono- and ditridecyl phosphate as well as mixtures thereof, mono- and ditetradecyl phosphate as well as mixtures thereof, mono- and di-2-ethylhexyl ester phosphate as well as mixtures thereof (S12), mono- and di-[isotridecyl polyglycolether (20 EO)]phosphate as well as mixtures thereof (S3), mono- and di-[isotridecyl polyglycolether (9 EO)]phosphate) as well as mixtures thereof (S4), mono- and di-[icosyl polyglycolether (12 EO)]phosphate as well as mixtures thereof (S5), mono- and di-[henicosyl polyglycolether (12 EO)]phosphate as well as mixtures thereof, mono- and di-[docosyl polyglycolether (12 EO)]phosphate as well as mixtures thereof, mono- and di-[tallowyl polyglycolether (11 EO)]phosphate as well as mixtures thereof (S8), mono- and di-isotridecyl phophates as well as mixtures thereof (S9), mono- and di-[nonylphenyl polyglycolether (9 EO)]phosphate as well as mixtures thereof (S10), mono- and di-[tristyrylphenyl polyglycolether (14 EO)]phosphate as well as mixtures thereof (S11), mono- and di-[2-ethylhexyl polyglycolether (3 EO)]phosphate as well as mixtures thereof (S13).

In yet another embodiment of the first aspect of the present invention, the surfactant may be solid at 20°C. In a further embodiment of the first aspect of the present invention, the polyanion may be poly(styrenesulfonate).

In another embodiment of the first aspect of the present invention, the polymer or copolymer of a substituted or unsubstituted thiophene may be poly(3,4-ethylenedioxythiophene).

In yet another embodiment of the first aspect of the present invention, the freeze-dried composition may be a dry product, a concentrated dispersion or a paste.

In a second aspect, the present invention relates to an aqueous or organic solvent solution or dispersion comprising a dispersed or dissolved composition and an aqueous or organic solvent, the composition comprising
- a polyanion,
- a polymer or copolymer of a substituted or unsubstituted thiophene,
- and a surfactant, wherein the surfactant comprises a mono- or diesterified phosphoric acid or a mixture thereof, or a partially neutralized salt thereof.

In a further embodiment of the present invention, the aqueous or organic solvent is selected from the group consisting of water, ethyl acetate, methyl ethyl ketone, ethanol, toluene and mixtures thereof. In yet another aspect, the present invention relates to a method for making an aqueous or organic solvent solution or dispersion comprising the step of adding an aqueous or organic solvent to the freeze-dried composition according to the first aspect of the present invention.

In a further aspect, the present invention relates to a method for making an antistatic or electroconductive layer or pattern comprising the steps of:
- obtaining an aqueous or organic solvent solution or dispersion according to the second aspect of the present invention, and
- applying the solution or dispersion to an object.

In another aspect, the present invention relates to the use of an aqueous or solvent solution or dispersion according to the second aspect of the present invention for preparing an antistatic or electroconductive layer.

In yet a further aspect, the present invention relates to an ink comprising a composition according to the first aspect of the present invention or an aqueous or solvent solution or dispersion according to the second aspect of the present invention.

In another aspect, the present invention relates to the use of such an ink for preparing an antistatic or electroconductive layer.

In yet a further aspect, the present invention relates to the use of a surfactant in the preparation of a freeze-dried composition comprising a polymer or copolymer of a substituted or unsubstituted thiophene and a polyanion, wherein the surfactant comprises a mono- or diesterified phosphoric acid or a mixture thereof, or a partially neutralized salt thereof. This advantageously improves the dispersability of the freeze-dried polymer or copolymer of a substituted or unsubstituted thiophene.

In a further aspect, the present invention relates to the use of a surfactant for dispersing a composition comprising a freeze-dried polymer or copolymer of a substituted or unsubstituted thiophene and a polyanion, wherein said surfactant comprises a mono- or diesterified phosphoric acid or a mixture thereof or a partially neutralized salt thereof. This is advantageous because this kind of surfactant improves the dispersability of compositions comprising a freeze-dried polymer or copolymer of a substituted or unsubstituted thiophene and a polyanion.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of products in this field, the present concepts are believed to represent substantial new and novel improvements, including departures from prior practices, resulting in the provision of more efficient and useful products of this nature.

The above and other characteristics, features and advantages of the present invention will become apparent from the following detailed description, taken in conjunction with the accompanying drawings which illustrate, by way of example, the principles of the invention. This description is given for the sake of example only, without limiting the scope of the invention. The reference figures quoted below refer to the attached drawings.

### Description of illustrative embodiments

The present invention will be described with respect to particular embodiments but the invention is not limited thereto but only by the claims.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

### Definitions

"Freeze-drying" according to the present invention is a lyophilization process in which a substance is first frozen and then the quantity of solvent (generally water) is reduced, first by sublimation (= primary drying process) and then by desorption (= secondary drying process) until the temperature of the shelves becomes equal to the atmospheric temperature in the freeze dryer. The freeze-drying process is enabled by the ability of solid materials such as ice to sublime (change directly into a gas without passing through a liquid phase) under the right conditions.

By "partially neutralized salt" or "partial neutralisation salt" of a mono- or diesterified phosphoric acid, it must be understood a mono- or diesterified phosphoric acid in which some but not all of the hydrogen atoms belonging to hydroxy group(s) of the mono- or diesterified phosphoric acid have been replaced by positive ions other than protons. In other words, it is the product of the incomplete reaction of a mono- or diesterified phosphoric acid with a base leading to the replacement of at least one but not all hydrogen atoms belonging to hydroxy group(s) in the mono- or diesterified phosphoric acid by positive ions other than protons. Such a mono- or diesterified phosphoric acid partially neutralized salt has a non-null acid value which is smaller than the acid value of the corresponding mono- or diesterified phosphoric acid. Example of suitable positive ions comprise but are not limited to Na⁺, K⁺, Li⁺, NR'R"R"'R""⁺ (where R', R", R"', and R"" may be the same or different and may be hydrogen or substituted or unsubstituted alkyl or aryl groups) among others.. Examples of suitable bases comprise but are not limited to NaOH, KOH, LiOH and NR'R"R'"R""OH wherein R', R", R'", and R"" may be the same or different and may be hydrogen or substituted or unsubstituted alkyl or aryl groups (e.g. NH₄OH) among others.

As used herein and unless provided otherwise, the terms "Conductivity enhancement" refer to a process in which contact with high boiling point liquids such as di- or polyhydroxy- and/or carboxy groups or amide or lactam group containing organic compound optionally followed by heating at elevated temperature, preferably between 100 and 250 °C, during preferably 1 to 90 seconds, results in conductivity increase. Alternatively in the case of aprotic compounds with a dielectric constant ≥ 15, e.g. N-methyl-pyrrolidinone, temperatures below 100°C can be used. Such conductivity enhancement is observed with polythiophenes and can take place during the preparation of a layer or subsequently. Particularly preferred liquids for such treatment are N-methyl-pyrrolidinone and diethylene glycol such as disclosed in EP-A 686 662 and EP-A 1 003 179.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a freeze-dried composition comprising a polyanion, a polymer or copolymer of a substituted or unsubstituted thiophene, and a surfactant. The ensemble comprising the polyanion and the polymer or copolymer of a substituted or unsubstituted thiophene will also be reffered hereinafter as the "*latex*". Freeze-drying

In a first aspect, the present invention relates to a freeze-dried composition, i.e. a composition which has undergone a freeze-drying process. In an embodiment of the present invention, the freeze-dried composition according to the present invention may be a dispersible (or redispersible) or soluble composition obtainable by the freeze-drying of an aqueous or solvent based dispersion comprising a polyanion, a polymer or copolymer of a substituted or unsubstituted thiophene, and a surfactant as defined herebelow. In other words, in an embodiment of the present invention, the freeze-dried composition according to the present invention may be a dispersible (or redispersible) or soluble product obtainable by freeze-drying an aqueous or solvent based dispersion of a surfactant and a latex comprising a polyanion and a polymer or copolymer of a substituted or unsubstituted thiophenesaid surfactant comprising a mono- or diesterified phosphoric acid or a mixture thereof or a partially neutralized salt thereof.

The first step in freeze-drying a product is to convert it into a frozen state. During the freezing process the solvent (e.g. water) is preferably crystallized. In the case of water, the formation of ice crystals results in a separation of the solutes and the solvent. Then the ice crystals are removed by sublimation under vacuum conditions. While the sublimation or primary drying process removes most of the water from the frozen matrix, there can still be greater than 5% moisture weight/weight with respect to the freeze-dried product in the cake. Thereafter the remaining water may be removed by desorption. Products freeze-dried at room temperature, according to an embodiment of the present invention, typically have a water content of 15 to 20% by weight. Further drying of the freeze-dried product in a vacuum drying cupboard at 110°C and a drying cupboard at 110°C results in products which are more difficult to disperse. In an embodiment of the present invention, the water content of the freeze-dried composition is 15% by weight or more. In an embodiment of the present invention, the water content of the freeze-dried composition is 20% by weight or less.

In a further embodiment of the present invention the freeze-dried composition according to the present invention is present in the form of a dry, spongy, woolly powder, a concentrated dispersion or a paste. A concentrated dispersion or a paste can be obtained instead of a powder by incomplete freeze-drying of the aqueous or solvent dispersion. The freeze-dried composition in the form of a powder, concentrated dispersion or paste can be dissolved or dispersed by adding water, organic solvents or a mixture water/solvent optionally with other ingredients such as surfactants and dispersants.

In yet another embodiment of the present invention, the concentrated dispersion or paste has a solid content preferably higher than 10% by weight, more preferably higher than 20 % by weight, most preferably higher than 50 % by weight.

A concentrated dispersion in an organic solvent can, for example, be realized by freeze-drying a mixture of the organic solvent and the aqueous or solvent dispersion or solution of polythiophene/polyanion so as to form a dispersion of polythiophene/polyanion in the organic solvent.

This concentrated dispersion or paste can be diluted or redispersed to obtain any desired concentration in a similar manner to the powder.

### Polyanion

Examples of polyanions suitable for use in the freeze-dried composition of the present invention are disclosed in EP-A 440 957 which is incorporated by reference in its entirety. These polyanions are for instance formed from polyacids or can be added as a salt of the corresponding polyacids, e.g. an alkali salt.

In a preferred embodiment of the present invention, the polyanion is the anion of a polymeric carboxylic acid, such as poly(acrylic acid), poly(methacrylic acid) and poly(maleic acid), or of a polymeric sulphonic acid, such as poly(styrene sulphonic acid) or poly(vinyl sulphonic acid). These polycarboxylic acids and polysulphonic acids can also be copolymers of vinylcarboxylic acids and/or vinylsulphonic acids with other polymerizable monomers, e.g. acrylic acid esters, methacrylic acid esters and styrene.

In a more preferred embodiment of the present invention, the polyanion is the anion of poly(styrene sulphonic acid) or of copolymers thereof with styrene. In a most preferred embodiment of the present invention, the polyanion is poly(styrenesulfonate).

The molecular weight of these polyanion forming polyacids is preferably 1000 g/mol or more, more preferably 2000 g/mol or more. The molecular weight of these polyanion forming polyacids is preferably 2x10⁶ g/mol or less, more preferably 5x10⁵ g/mol or less. These polyacids or their alkali salts are commercially available and can be prepared according to the known methods, e.g. as described in Houben-Weyl, Methoden der Organische Chemie, Bd. E20 Makromolekulare Stoffe, Teil 2, (1987), pp. 1141.

### Polymer or copolymer of a substituted or unsubstituted thiophene

According to an embodiment of the present invention, the thiophene is substituted in at least one of the 3- or 4-positions with a substituent selected from the group consisting of unsubstituted C₁₋₁₀ alkoxy, substituted C₁₋₁₀ alkoxy, unsubstituted C₁₋₁₀ alkyl, substituted C₁₋₁₀ alkyl, unsubstituted aryl and substituted aryl groups or the 3- and 4-positions are linked with an unsubstituted or optionally substituted oxy-C₁₋₄ alkylene-oxy group.

As used herein, and unless otherwise stated, the term "C₁₋₁₀ alkyl " means straight and branched chain saturated acyclic hydrocarbon monovalent groups having from 1 to 10 carbon atoms, such as but not limited to methyl, ethyl, propyl, n-butyl, 1-methylethyl (isopropyl), 2-methylpropyl (isobutyl), 1,1-dimethylethyl (*tert*-butyl), 2-methylbutyl, n-pentyl, dimethylpropyl, n-hexyl, 2-methylpentyl, 3-methylpentyl, n-heptyl, n-octyl, n-nonyl, n-decyl and the like.

Similarly the term "C₁₋₄ alkyl" refers to group having 1 to 4 carbon atoms such as but not limited to methyl, ethyl, propyl, n-butyl, 1-methylethyl (isopropyl), 2-methylpropyl (isobutyl) and 1,1-dimethylethyl (*tert*-butyl).

As used herein, and unless otherwise stated, the term " C₁₋₄ alkylene" means straight and branched chain saturated acyclic hydrocarbon divalent groups having from 1 to 4 carbon atoms, such as but not limited to methylene, ethylene, propylene and butylene.

As used herein, and unless otherwise stated, the term " C₃₋₁₀ cylcloalkylene" means saturated cyclic hydrocarbon divalent groups having from 3 to 10 carbon atoms in the ring, such as but not limited to cyclopentylene, cyclohexylene and cycloheptylene.

The aforementioned alkyl, oxy-alkylene-oxy, cylcloakylene and alkylene groups may be unsubstituted or may optionally be substituted with 1, 2, 3, 4 or 5 substituent(s) independently selected from the group consisting of phenyl, fluoro, chloro, bromo, iodo, methoxy, ethoxy, propoxy, isopropoxy, butoxy, sec-butoxy, tert-butoxy, nitro, cyano and hydroxy.

As used herein, and unless otherwise stated, the term " aryl " designates any mono- or polycyclic aromatic monovalent hydrocarbon group having from 6 up to 30 carbon atoms, preferably having 6, 10 or 14 carbon atoms, such as but not limited to phenyl, naphthyl, anthracenyl, phenantracenyl, fluoranthenyl, chrysenyl, pyrenyl, biphenylyl, terphenyl, picenyl, indenyl, biphenyl, indacenyl, benzocyclobutenyl, benzocyclooctenyl and the like, including fused benzo-C₄₋₈ cycloalkyl groups (the latter being as defined above) such as, for instance, indanyl, tetrahydronaphthyl, fluorenyl and the like, all of the said groups being optionally substituted with one or more substituents, preferably with 1, 2, 3, 4 or 5 substituent(s), independently selected from the group consisting of fluoro, chloro, bromo, iodo, methyl, ethyl, propyl, n-butyl, 1-methylethyl (isopropyl), 2-methylpropyl (isobutyl), 1-dimethylethyl (*tert*-butyl), methoxy, ethoxy, propoxy, isopropoxy, butoxy, sec-butoxy, tert-butoxy, nitro, cyano, hydroxy, amino, trifluoromethyl and hydroxysulfhydryl such as for instance 4-fluorophenyl, 4-chlorophenyl, 3,4-dichlorophenyl, 4-cyanophenyl, 2,6-dichlorophenyl, 2-fluorophenyl, 3-chlorophenyl, 3,5-dichlorophenyl and the like.

As used herein, and unless otherwise stated, the term " C₁₋₁₀ alkoxy " means straight and branched chain saturated acyclic hydrocarbon monovalent groups having from 1 to 10 carbon atoms, which is interrupted by at least one, preferably by 1 or 2, more preferably by 1, oxygen atom in the chain such as but not limited to methoxy, ethoxy, propoxy, isopropoxy, butoxy, sec-butoxy, tert-butoxy and the like.

The aforementioned alkoxy groups may be unsubstituted or may optionally be substituted with 1, 2, 3, 4 or 5 substituent(s) independently selected from the group consisting of phenyl, fluoro, chloro, bromo, iodo, nitro, cyano and hydroxy.

In a preferred embodiment of the present invention the polymer of a substituted thiophene is represented by formula (I): 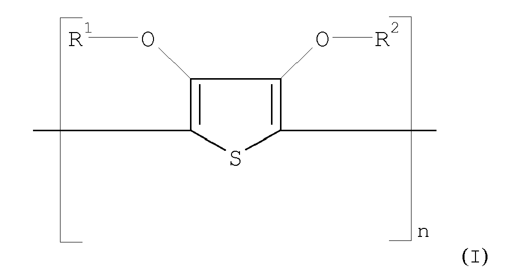 In an embodiment, n is larger than 1, preferably larger than 2, most preferably larger than 5. In an embodiment, n is 10000 or less, preferably 5000 or less. In an embodiment, each of R¹ and R² independently represents hydrogen or an unsubstituted or optionally substituted C₁₋₄ alkyl group or together form an unsubstituted or optionally substituted C₁₋₄ alkylene group or an unsubstituted or optionally substituted C₃₋₁₀ cycloalkylene group, preferably an unsubstituted ethylene group, an unsubstituted methylene group, an optionally alkyl-substituted methylene group, an optionally C₁₋₁₂ alkyl- or phenyl-substituted ethylene group, an unsubstituted 1,3-propylene group or an unsubstituted 1,2-cyclohexylene group.

In another embodiment of the present invention, the polymer or copolymer of a substituted thiophene is a polymer or copolymer of a (3,4-dialkoxy-thiophene) in which the two alkoxy groups together form an optionally substituted oxy-alkylene-oxy bridge selected from the group consisting of: (3,4-methylenedioxy-thiophene), (3,4-methylenedioxythiophene) derivatives, (3,4-ethylenedioxythiophene), (3,4-ethylene-dioxythiophene) derivatives, (3,4-propylenedioxythiophene), (3,4-propylenedioxy-thiophene) derivatives, (3,4-butylene-dioxythiophene) and (3,4-butylenedioxy-thiophene) derivatives and copolymers therewith.

In yet another embodiment of the present invention, the polymer or copolymer of a substituted thiophene is a polymer or copolymer of a (3,4-dialkoxy-thiophene) in which the two alkoxy groups together form an oxy-alkylene-oxy bridge substituted with a substituent selected from the group consisting of alkyl, alkoxy, alkyloxyalkyl, carboxy, alkylsulfonato and carboxy ester groups.

In yet another embodiment of the present invention, the polymer of a substituted thiophene is a poly(3,4-dialkoxy-thiophene) in which the two alkoxy groups together form an optionally substituted oxy-alkylene-oxy bridge which is an unsubstituted 1,2-ethylene group, an unsubstituted methylene group, an optionally alkyl-substituted methylene group, an optionally C1-12 alkyl- or phenyl-substituted 1,2-ethylene group, an unsubstituted 1,3-propylene group or an unsubstituted 1,2-cyclohexylene group.

Such polymers are disclosed in Handbook of Oligo- and Polythiophenes Edited by D. Fichou, Wiley-VCH, Weinheim (1999); by L. Groenendaal et al. in Advanced Materials, volume 12, pages 481-494 (2000); L. J. Kloeppner et al. in Polymer Preprints, volume 40(2), page 792 (1999); P. Schottland et al. in Synthetic Metals, volume 101, pages 7-8 (1999); and D. M. Welsh et al. in Polymer Preprints, volume 38(2), page 320 (1997).

The preparation of such a polythiophene and of aqueous dispersions containing such a polyanion and a polymer or copolymer of a substituted thiophene is described in EP-A-440 957 and corresponding U.S. Pat. N°5,300,575. Basically the preparation of polythiophene may proceed in the presence of polymeric polyanion compounds by oxidative polymerisation of 3,4-dialkoxythiophenes or 3,4-alkylenedioxythiophenes according to formula (II): 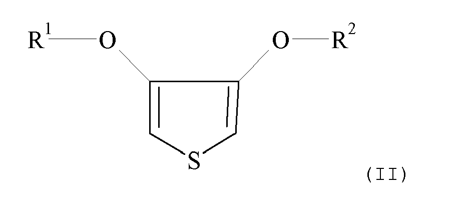 wherein R¹ and R² have the same meaning as R1 and R2 in formula (I).

### Surfactant

In an embodiment of the present invention, the surfactant can be either a single surfactant or a mixture of surfactants. In any cases, the surfactant comprises a mono- or diesterified phosphoric acid or a mixture thereof, or a partially neutralized salt thereof. For instance, the surfactant may be or may comprise a monoesterified phosphoric acid. As another example, the surfactant may be or may comprise a diesterified phosphoric acid. In yet a further example, the surfactant may be or comprise a mixture of monoesterified phosphoric acid and diesterified phosphoric acid. Since mono-esters, diesters and mixture thereof are usable in embodiments of the present invention, the ratio monoester/diester in the surfactant is not critical. Suitable ratio monoester/diester are for instance 50:1 or lower, 40:1 or lower, 30:1 or lower, 20:1 or lower, 15:1 or lower, 12:1 or lower, 10:1 or lower, 9:1 or lower, 8:1 or lower, 7:1 or lower, 6:1 or lower, 5:1 or lower, 4:1 or lower, 3:1 or lower, 2:1 or lower, 1.5:1 or lower, 1.2:1 or lower, 1:1, 1:1.2 or higher, 1:1.5 or higher, 1:2 or higher, 1:3 or higher, 1:4 or higher, 1:5 or higher, 1:6 or higher, 1:7 or higher, 1:8 or higher, 1:9 or higher, 1:10 or higher, 1:12 or higher, 1:15 or higher, 1:20 or higher, 1:30 or higher, 1:40 or higher or 1:50 or higher. Preferred ratio monoester/diester are close to 1:1. For instance, the ratio monoester/diester may be 1.5:1 or lower and 1:1.5 or higher, or 1.2:1 or lower and 1:1.2 or higher. Also, the surfactant may be or comprise a partially neutralized salt of any of the surfactants given in the three embodiments above. In a preferred embodiment of the present invention, the surfacant is not a neutralization salt.

In a preferred embodiment of the present invention, the partially neutralized salt has an acid value equal to 50% or more, more preferably equal to 75% or more, most preferably equal to 90 % or more, of the acid value of the corresponding (non-neutralised) mono- or diesterified phosphoric acid.

Although partially neutralized salts are useful in embodiments of the present invention, non-neutralised mono- or diesterified phosphoric acid or a mixture thereof are preferred.

Examples of suitable commercially available phosphate ester surfactants are given in Table 2 below:

**Table 2:**

| Trade name | R5 and/or R6 | n and m | Mono/ diester ratio | Acid Value (mg KOH/g) |
|---|---|---|---|---|
| Lakeland^{™} PA 100 | CH₃ | 0 | 40:1 | NA |
| Lakeland^{™} PA 800; Lakeland PA 801 | C₈H₁₇ | 0 | 1:1 | NA |
| Lakeland^{™} PAE 802 | C₈H₁₇ | 2 | 1:1 | NA |
| Lakeland^{™} PAE 106 | C₁₀H₂₁ | 6 | 3:2 | NA |
| Lakeland^{™} PAE 126 | C₁₂H₂₅ | 6 | 3:2 | NA |
| Lakeland^{™} PAE 136 | C₁₃H₂₇ | 6 | 3:2 | NA |
| Lakeland^{™} PAE 147 | C₁₄H₂₉ | 7 | 12:1 | NA |
| Lakeland^{™} PAE 176 | C₁₇H₃₅ | 6 | 5.5:4.5 | NA |
| Lakeland^{™} PAE 185 | C₁₈H₃₅ | 5 | 5.5:4.5 | NA |
| Lakeland^{™} PAE 1780 | C₁₈H₃₅ | 80 | 2:1 | NA |
| Lakeland^{™} PPE 604 | phenyl | 4 | 40:1 | NA |
| Lakeland^{™} PPE 156 | C₆H₄-C₉H₁₉ | 6 | 2:3 | NA |
| Lakeland^{™} PPE 159 | C₆H₄-C₉H₁₉ | 9 | 3:2 | NA |
| Lakeland^{™} PPE 1513 | C₆H₄-C₉H₁₉ | 13 | 48:1 | NA |
| AGNIQUE^{™} PE 810 | C8-10 | | NA | NA |
| AGNIQUE^{™} PE 2EH | 2-ethylhexanol | 2 | NA | NA |
| AGNIQUE^{™} PE NP-4 | nonylphenol | 4 | NA | NA |
| AGNIQUE^{™} PE NP-6 | nonylphenol | 6 | NA | NA |
| AGNIQUE^{™} PE NP-8 | nonylphenol | 8 | NA | NA |
| AGNIQUE^{™} PE NP-9 | nonylphenol | 9 | NA | NA |
| AGNIQUE^{™} PE NP-10 | nonylphenol | 10 | NA | NA |
| AGNIQUE^{™} PE DNP-8 | dinonylphenol | 8 | NA | NA |
| AGNIQUE^{™} PE IDA-6 | isodecanol | 6 | NA | NA |
| AGNIQUE^{™} PE TDA-6 | C13 tridecanol | 6 | NA | NA |
| AGNIQUE^{™} PE 25 | C12-15 | | NA | NA |
| AGNIQUE^{™} PE 25-5 | C12-15 | 5 | NA | NA |
| AGNIQUE^{™} PE 28-3 | C12-18 | 3 | NA | NA |
| AGNIQUE^{™} PE 24-6 | C12-14 | 6 | NA | NA |
| AGNIQUE^{™} PE 68 | C16-18 | | NA | NA |
| AGNIQUE^{™} PE 68-5 | C16-18 | 5 | NA | NA |
| "ALBRITE^{™}" | n-butyl | 0 | 1:1 | NA |
| "ALBRITE^{™}" | amyl | 0 | 1:1 | NA |
| "ALBRITE^{™}" | n-hexyl | 0 | 1:1 | NA |
| "ALBRITE^{™}" | n-hepyl | 0 | 1:1 | NA |
| "ALBRITE^{™}" | n-octyl | 0 | 1:1 | NA |
| "ALBRITE^{™}" | 2-ethylhexyl | 0 | 1:1 | NA |
| "ALBRITE^{™}" | nonyl | 0 | 1:1 | NA |
| "ALBRITE^{™}" | oleyl | 0 | 1:1 | NA |
| "ALBRITE^{™}" | phenyl | 0 | 1:1 | NA |
| PLYSURF^{™} AL | | NA | 1:1 | NA |
| PLYSURF^{™} A208B | | NA | 1:1 | NA |
| PLYSURF^{™} A208N | | NA | 1:1 | NA |
| PLYSURF^{™} A207H | | NA | 1:1 | NA |
| PLYSURF^{™} A212C | | NA | 1:1 | NA |
| PLYSURF^{™} A210G | | NA | 1:1 | NA |
| PLYSURF^{™} A212F | | NA | 1:1 | NA |
| PLYSURF^{™} A215C | | NA | 1:1 | NA |
| PLYSURF^{™} A216B | | NA | 1:1 | NA |
| PLYSURF^{™} A217E | | NA | 1:1 | NA |
| PLYSURF^{™} A219B | | NA | 1:1 | NA |
| LUBRHOPHOS^{™} LB-400 | oleyl | 4 | NA | NA |
| LUBRHOPHOS^{™} LF-200 | Dodecylphenyl | 2 | NA | NA |
| LUBRHOPHOS^{™} LL-550 | C*-C14 | 505 | NA | NA |
| LUBRHOPHOS^{™} LM-400 | Dinonylphenyl | 5 | NA | NA |
| LUBRHOPHOS^{™} LP-700 | Phenyl | 6 | NA | NA |
| RHODAFAC^{™} HA70 | phenyl | 4 | NA | NA |
| RHODAFAC^{™} PA15 | Phenyl | 2 | NA | NA |
| RHODAFAC^{™} PA17 | 2-ethylhexyl | 6 | NA | NA |
| RHODAFAC^{™} PA35 | Oleocetyl | 5 | NA | NA |
| RHODAFAC^{™} RE 610 | Nonylphenyl | 9.5 | NA | NA |
| RHODAFAC^{™} RD 510 | Lauryl | 4 | NA | NA |
| RHODAFAC^{™} RA 600 | C8 - C10 | 6 | NA | NA |
| RHODAFAC^{™} RE 960 | nonylphenyl | 50 | NA | NA |
| SERVOXYL^{™} VPAZ 100 | C12-14 | 0 | 1:1 | 225-245 |
| SERVOXYL^{™} VPBZ 5/100 | C12-18 | 5 | 1:1 | 110-120 |
| SERVOXYL^{™} VPDZ 100 | C13 (isotridecyl) | 0 | 1:1 | 215-240 |
| SERVOXYL^{™} VPDZ 3/100 | C13 (isotridecyl) | 3 | 1:1 | 140-150 |
| SERVOXYL^{™} VPDZ 6/100 | C13 (isotridecyl) | 6 | 1:1 | 110-125 |
| SERVOXYL^{™} VPDZ 9/100 | C13 (isotridecyl) | 9 | 1:1 | 87-96 |
| SERVOXYL^{™} VPDZ 20/100 | C13 (isotridecyl) | 20 | 1:1 | 48-58 |
| SERVOXYL^{™} VPFZ 7/100 | oleyl | 7 | 1:1 | 83-100 |
| SERVOXYL^{™} VPGP 4/65 | phenol | 4 | 1:1 | NA |
| SERVOXYL^{™} VPGZ 6/100 | phenol | 6 | 1:1 | 150-180 |
| SERVOXYL^{™} VPIZ 100 | n-butanol | 0 | 1:1 | 450-480 |
| SERVOXYL^{™} VPNZ 6/100 | nonylphenol | 6 | 1:1 | 88-91 |
| SERVOXYL^{™} VPNZ 7/100 | nonylphenol | 7 | 1:1 | 105-115 |
| SERVOXYL^{™} VPNZ 9/100 | nonylphenol | 9 | 1:1 | 86-96 |
| SERVOXYL^{™} VPNZ 20/30 | nonylphenol | 20 | 1:1 | 16-20 |
| SERVOXYL^{™} VPPZ 100 | isopropanol | 0 | 1:1 | 470-520 |
| SERVOXYL^{™} VPQZ 14/100 | tristearylphenol | 14 | 1:1 | 55-70 |
| SERVOXYL^{™} VPRZ 6/100 | tallow | 6 | 1:1 | 93-105 |
| SERVOXYL^{™} VPRZ 11/100 | tallow | 11 | 1:1 | 66-76 |
| SERVOXYL^{™} VPTZ 100 | 2-ethylhexanol | 0 | 1:1 | 300-330 |
| SERVOXYL^{™} VPTZ 3/100 | 2-ethylhexanol | 3 | 1:1 | 170-200 |
| SERVOXYL^{™} VPT 3/85 | 2-ethylhexanol | 3 | 1:1 | NA |
| SERVOXYL^{™} VPVZ 12/100 | C20-22 | 12 | 1:1 | 57-65 |
| SERVOXYL^{™} VPXZ 100 | isononanol | 0 | 1:1 | 280-310 |
| SERVOXYL^{™} VQAZ 100 | C18-Guerbet alcohol | 0 | 1:1 | 168-183 |
| SERVOXYL^{™} VMUZ 100 | Methanol | 0 | 1:1 | 965-1010 |
| SERVOXYL^{™} VMDZ 6/100 | C13 | 6 | 1:1 | 245-270 |
| SERVOXYL^{™} VMNZ 9/100 | nonylphenol | 9 | 1:1 | 190-205 |
| CRODAFOS^{™} S 2 A | stearyl | 3 | 1:1 | NA |
| CRODAFOS^{™} T 5 A | C13 (tridecanol) | 5 | 1:1 | NA |
| CRODAFOS^{™} T 10 A | C13 (tridecanol) | 10 | 1:1 | NA |
| CRODAFOS^{™} 810 A | C8-10 | 0 | 1:1 | NA |
| CRODAFOS^{™} 25 D 5 A | C12-15 | 5 | 1:1 | NA |
| CRODAFOS^{™} 25 D A | C12-15 | 0 | 1:1 | NA |
| CRODAFOS^{™} N 3 A | oleyl | 3 | 1:1 | NA |
| CRODAFOS^{™} N 5 A | oleyl | 5 | 1:1 | NA |
| CRODAFOS^{™} N 10 A | oleyl | 10 | 1:1 | NA |
| CRODA^{™}: 2-ethylhexyl acid phosphate | 2-ethylhexyl | 0 | 1:1 | NA |

Albrite^{™} is a trademark from Albright & Wilson, Agnique^{™} is a trademark form Cognis, Plysurf^{™} is a trademark from Dai-ichi Kogyo Seiyaku, Lubrophos^{™} and Rhodafac^{™} are trademarks from Rhone Poulenc, Servoxyl™ is a trademark from Elementis Specialities.
In yet another embodiment of the present invention, the mono- or diesterified phosphoric acid is a compound of the following general formula (III), 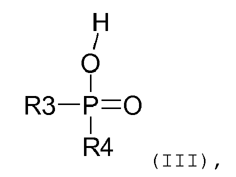 wherein
R3 is a hydroxy group or -(OCH₂)ₙOR5,
R4 is a hydroxy group or -(OCH₂)ₘOR6,
n is preferably 0,1, 2, 3, 4, 5, 6, 7, 8, 9, 10, 11, 12, 13, 14, 15, 16, 17, 18, 19 or 20,
m is preferably 0,1, 2, 3, 4, 5, 6, 7, 8, 9, 10, 11, 12, 13, 14, 15, 16, 17, 18, 19 or 20,

R5 and R6 are preferably each independently of one another a hydrocarbon group, unsubstituted or substituted, branched or linear, cyclic, non-cyclic or heterocyclic, saturated or unsaturated, aromatic, non-aromatic or heteroaromatic, comprising 8, 9, 10, 11, 12, 13, 14, 15, 16, 17, 18, 19, 20, 21, 22, 23, 24, 25, 26, 27, 28, 29 or 30 carbon atoms. with the proviso that both R3 and R4 are not hydroxy groups simultaneously.

Preferably R5 and R6 are each independently of one another a hydrocarbon group, unsubstituted or substituted, branched or linear, cyclic, non-cyclic or heterocyclic, saturated or unsaturated, aromatic, non-aromatic or heteroaromatic comprising 12, 13, 14, 15, 16, 17, 18, 19, 20, 21, 22, 23, 24, 25, 26, 27, 28, 29 or 30 carbon atoms.

More preferably R5 and R6 are each independently of one another a hydrocarbon group selected from the group consisting of octyl, 2-ethylhexyl, secondary octyl, nonyl, secondary nonyl, decyl, secondary decyl, undecyl, secondary undecyl, dodecyl, secondary dodecyl, tridecyl, isotridecyl, secondary tridecyl, tetradecyl, secondary tetradecyl, hexadecyl, lauryl, dilauryl, secondary hexadecyl, stearyl, icosyl, docosyl, tetracosyl, triacontyl, 2-butyloctyl, 2-butyldecyl, 2-hexyloctyl, 2-hexyldecyl, 2-octyldecyl, 2-hexyldodecyl, 2-octyldodecyl, 2-decyltetradecyl, 2-dodecylhexadecyl, 2-hexadecyloctadecyl, 2-tetradecyloctadecyl, monomethyl branched-isostearyl, nonylphenyl and tristyrylphenyl.

Even more preferably R5 and R6 are each independently of one another a hydrocarbon group selected from the group consisting of dodecyl, secondary dodecyl, tridecyl, isotridecyl, secondary tridecyl, tetradecyl, secondary tetradecyl, hexadecyl, lauryl, dilauryl, secondary hexadecyl, stearyl, icosyl, docosyl, tetracosyl, triacontyl, 2-butyloctyl, 2-butyldecyl, 2-hexyloctyl, 2-hexyldecyl, 2-octyldecyl, 2-hexyldodecyl, 2-octyldodecyl, 2-decyltetradecyl, 2-dodecylhexadecyl, 2-hexadecyloctadecyl, 2-tetradecyloctadecyl and monomethyl branched-isostearyl.

The term saturated hydrocarbon refers to saturated linear or branched-chain monovalent hydrocarbon radical of 8 to 30 carbon atoms, such as alkyl radicals, wherein the alkyl radical may be optionally substituted independently with one or more substituents described below.

The term unsaturated hydrocarbon refers to linear or branched-chain monovalent hydrocarbon radical of 8 to 30 carbon atoms with at least one site of unsaturation, such as alkenyl radicals, wherein the alkenyl radical may be optionally substituted independently with one or more substituents described below, and includes radicals having "cis" and "trans" orientations, or alternatively, "E" and "Z" orientations.

The term aromatic hydrocarbon refers to a monovalent aromatic hydrocarbon radical derived by the removal of one hydrogen atom from a single carbon atom of a parent aromatic ring system such as an aryl radical. Aryl radicals include, but are not limited to, radicals derived from benzene, substituted benzenes, naphthalene, substituted naphthalene and the like.

The term heteroaromatic hydrocarbon refers to monovalent aromatic hydrocarbon radical wherein one or more of the atoms in the aromatic ring(s) are of an element other than carbon, such as e.g. oxygen, sulphur or nitrogen. Preferably, each ring contains 5 or 6 atoms of which 1 to 3 atoms are heteroatoms, each carbon or nitrogen atom being optionally substituted independently with one or more sybstituents described below. Examples of heteroaromatic hydrocarbon radicals include, but are not limited to pyridine, imidazole, pyrazole, oxazole, thiophene, and their benzannulated analogs (benzimidazole, for example).

The term heterocyclic hydrocarbon refers to a monovalent cyclic hydrocarbon radical wherein one or more of the atoms in the cycle(s) is of an element other than carbon, such as e.g. oxygen, sulphur or nitrogen. Heterocyclic hydrocarbon radicals are preferably saturated, partially saturated or unsaturated, monocyclic or fused bicyclic ring wherein each ring contains 5 or 6 atoms of which 1 to 3 atoms are nitrogen, sulphur or oxygen, each carbon or nitrogen atom being optionally substituted independently with one or more sybstituents described below. Examples and suitable Heterocyclic hydrocarbon radicals include but are not limited to thiazolidinyl, pyrrolidinyl, pyrrolinyl, 2-pyrrolidonyl, 2,5-dioxopyrrolidinyl, tetrahydrofuranyl, tetrahydropyranyl, piperidyl, piperazinyl, 1,3-dioxolanyl, and thienyl, among others

The aforementioned aryl, alkyl, alkenyl, heteroaromatic, cyclic or heterocyclic radicals may be unsubstituted or may optionally be substituted with 1, 2, 3, 4 or 5 substituent(s) independently selected from the group consisting of phenyl, -(CH=CH)-phenyl, methyl, ethyl, 1-propyl, 2-propyl, 1- butyl, 2-methyl-1 -propyl, 2-butyl, 2-methyl-2-propyl, 1- pentyl, 2-pentyl, 3-pentyl, 2-methyl-2-butyl, 3-methyl-2-butyl, 3-methyl-1-butyl, 2-methyl-1 -butyl, 1-hexyl, 2-hexyl heptyl, secondary heptyl, octyl, 2-ethylhexyl, secondary octyl, nonyl, secondary nonyl, decyl, secondary decyl, undecyl, secondary undecyl, dodecyl, secondary dodecyl, tridecyl, isotridecyl, secondary tridecyl, tetradecyl, secondary tetradecyl, hexadecyl, lauryl, dilauryl, secondary hexadecyl, stearyl, icosyl, docosyl, tetracosyl, triacontyl, 2-butyloctyl, 2-butyldecyl, 2-hexyloctyl, 2-hexyldecyl, 2-octyldecyl, 2-hexyldodecyl, 2-octyldodecyl, 2-decyltetradecyl, 2-dodecylhexadecyl, 2-hexadecyloctadecyl, 2-tetradecyloctadecyl, monomethyl branched-isostearyl and the like.

For instance, the surfactant may be selected from the group consisting of mono- and di-[tallowyl polyglycolether (6 EO)]phosphate as well as mixtures thereof (S1), mono- and di-[oleyl polyglycolether (7 EO)]phosphate as well as mixtures thereof (S2), mono- and di-[isotridecyl polyglycolether (3 EO)]phosphate as well as mixtures thereof (S7), mono- and dilauryl phophate as well as mixtures thereof (S6), mono- and ditridecyl phosphate as well as mixtures thereof, mono- and ditetradecyl phosphate as well as mixtures thereof, mono- and di-2-ethylhexyl ester phosphate as well as mixtures thereof (S12), mono- and di-[isotridecyl polyglycolether (20 EO)]phosphate as well as mixtures thereof (S3), mono- and di-[isotridecyl polyglycolether (9 EO)]phosphate as well as mixtures thereof (S4), mono- and di-[icosyl polyglycolether (12 EO)]phosphate as well as mixtures thereof (S5), mono- and di-[henicosyl polyglycolether (12 EO)]phosphate as well as mixtures thereof, mono- and di-[docosyl polyglycolether (12 EO)]phosphate as well as mixtures thereof, mono- and di-[tallowyl polyglycolether (11 EO)]phosphate as well as mixtures thereof (S8), mono- and di-isotridecyl phophate as well as mixtures thereof (S9), mono- and di-[nonylphenyl polyglycolether (9 EO)]phosphate as well as mixtures thereof (S10), mono- and di-[tristyrylphenyl polyglycolether (14 EO)]phosphate as well as mixtures thereof (S11), mono- and di-[2-ethylhexyl polyglycolether (3 EO)]phosphate as well as mixtures thereof (S13).

Preferably the surfactant may be selected from the group consisting of of mono- and di-[tallowyl polyglycolether (6 EO)]phosphate as well as mixtures thereof (S1), mono- and di-[isotridecyl polyglycolether (20 EO)]phosphate as well as mixtures thereof (S3), mono- and di-[icosyl polyglycolether (12 EO)]phosphate as well as mixtures thereof (S5), mono- and di-[henicosyl polyglycolether (12 EO)]phosphate as well as mixtures thereof, mono- and di-[docosyl polyglycolether (12 EO)]phosphate as well as mixtures thereof, mono- and dilauryl phophate as well as mixtures thereof (S6) and mono- and di-[tallowyl polyglycolether (11 EO)]phosphate as well as mixtures thereof (S8).

The tallow alcohol used in the preparation of mono- and di-[tallowyl polyglycolether phosphate is a mixture of mainly stearyl and cetyl alcohols.
Preferably, when aromatic carbons are present in R5 and R6, only 6 aromatic carbons are present in both R5 and R6.
The reason for this preference is that it has been observed that when more than 6 aromatic carbons are present in R5 or R6 (as for instance in S11), the surfactant is only moderately efficient in favouring the dispersion of the freeze-dried composition according to the present invention (see Table 6), while when none of R5 and R6 comprise more than 6 aromatic carbons, the surfactant is highly efficient in favouring the dispersion of the freeze-dried composition according to the present invention.

Preferably, the surfactant is solid at room temperature, i.e. at 20°C. The reason being that it has been surprisingly observed that among the 13 phosphoric acid esters tested, the 5 bests are solid at 20°C and the remaining 8 tested phosphoric acid esters are liquids at 20°C.

A summary of the characteristics of the surfactants S1 to S13 is presented in Table 3.

**Table 3:**

| name | SERVOXYL number | alcohol base | form |
|---|---|---|---|
| S1 | VPRZ 6/100 | tallow alcohol + 6EO | solid |
| S2 | VPFZ 7/100 | oleyl alcohol + 7EO | liquid |
| S3 | VPDZ 20/100 | C13 alcohol + 20EO | solid |
| S4 | VPDZ 9/100 | C13 alcohol + 9EO | liquid |
| S5 | VPVZ 12/100 | C20-C22 alcohol + 12EO | solid |
| S6 | VPAZ 100 | C12-C14 alcohol | solid |
| S7 | VPDZ 3/100 | C13 alcohol + 3EO | liquid |
| S8 | VPRZ 11/100 | tallow alcohol + 11EO | solid |
| S9 | VPDZ 100 | C13 alcohol | liquid |
| S10 | VPNZ 9/100 | nonylphenol + 9EO | liquid |
| S11 | VPQZ 14/100 | tristyrylphenol + 14EO | liquid |
| S12 | VPTZ 100 | 2-ethylhexanol | liquid |
| S13 | VPTZ 3/100 | 2-ethylhexanol + 3EO | liquid |

The third column indicates the chemical nature of the groups R3 and/or R4 of the phosphonic acid ester surfactant. The number before EO indicates the number of ethylene glycol monomers present in the ethoxylated alcohol used to produce the corresponding phosphonic acid ester surfactant by phosphatation.

Monoesters can be produced by the reaction of either alcohols, alcohol ethoxylates or phenyl ethoxylates with polyphosphoric acid, whereas mixtures of mono and dieesters can be produced by reaction of the same feedstock with phosphorus pentoxide.

In an embodiment, the proportion (WT%) for the surfactant in comparison with the latex comprising a polyanion and a polymer or copolymer of a substituted or unsubstituted thiophene is preferably 1% or more, more preferably 5% or more, even more preferably 10% or more. Preferably, it is 100% or less, more preferably 50% or less, even more preferably 25% or less, and especially preferably 20% or less.

### Aqueous or organic solvent solution or dispersion

In a second aspect, the present invention relates to an aqueous or organic solvent solution or dispersion. In an embodiment, the aqueous or organic solvent solution or dispersion according to the present invention is used as a coating solution or dispersion.

An aqueous or organic solvent solution or dispersion according to the present invention comprises a freeze-dried composition according to the first aspect of the present invention which may be present in form of a powder, paste or concentrated dispersion, obtainable by freeze-drying an aqueous or solvent dispersion of a latex comprising a polyanion, a polymer or copolymer of a substituted or unsubstituted thiophene, and a surfactant.

In another embodiment of the present invention the aqueous or organic solvent solution or dispersion further comprises water or an organic solvent.

In another embodiment of the present invention the aqueous or organic solvent solution or dispersion has a concentration of the latex comprising a polyanion and a polymer or copolymer of a substituted or unsubstituted thiophene of at least 0.1% by weight, preferably at least 0.5% by weight, and particularly preferably at least 1% by weight of the aqueous or organic solvent solution or dispersion. Preferably, it is 10% by weight or less, with 5% by weight being preferred and 2% by weight or less being particularly preferred.

According to a further embodiment of the present invention, the aqueous or organic solvent solution or dispersion has a concentration of the latex comprising a polyanion and a polymer or copolymer of a substituted or unsubstituted thiophene of preferably at least 1% by weight of the aqueous or organic solvent solution or dispersion and a water content of preferably less than 12% by weight, more preferably less than 6% by weight of aqueous or organic solvent solution or dispersion.

According to a further embodiment of the present invention, aqueous or organic solvent solution or dispersion can be used for preparing an antistatic or electroconductive layer.

The aqueous or organic solvent solution or dispersion may comprise additional ingredients, such as a hardening agent e.g. an epoxysilane, such as 3-glycidyloxypropyl-triethoxy-silane, as described in EP-A 564 911 which is especially suitable when coating on a glass substrate; one or more additional surfactants; spacing particles; adhesion promoting agents, UV-filters or IR-absorbers.

Suitable aqueous or organic solvent comprise but are not limited to water, ethyl acetate, methyl ethyl ketone, ethanol, toluene and mixture thereof.

### Method for making an aqueous or organic solvent solution or dispersion

In a third aspect, the present invention relates to a method for making an aqueous or organic solvent solution or dispersion comprising the step of adding an aqueous or organic solvent to a freeze-dried composition according to the first aspect of the present invention.

### Method for making an antistatic or electroconductive layer or pattern

In a fourth aspect, the present invention relates to a method for making an antistatic or electroconductive layer or pattern. In a preferred embodiment of this fourth aspect, the method comprises the steps of (i) preparing an aqueous or organic solvent solution or dispersion according to the second aspect of the present invention and (ii) applying the solution or dispersion to an object.

### Ink

In a fifth aspect, the present invention relates to an ink, e.g. a printing ink comprising a composition according to the first aspect of the present invention. An ink is realized according to the present invention comprising a freeze-dried composition according to the first aspect of the present invention which may be present in form of a powder, or concentrated dispersion, obtainable by freeze-drying an aqueous or solvent dispersion of a latex comprising a polyanion, a polymer or copolymer of a substituted or unsubstituted thiophene, and a surfactant.

In a further embodiment of the present invention, the ink further comprises water or an organic solvent. According to another embodiment of the present invention, the ink is present on a support, e.g. in a dry form.

In yet another embodiment of the present invention, the ink has a concentration of the latex comprising a polyanion and a polymer or copolymer of a substituted or unsubstituted thiophene of preferably at least 0.1% by weight, preferably at least 0.5% by weight, and particularly preferably at least 1% by weight of the aqueous or organic solvent solution or dispersion. Preferably, it is 10% by weight or less, with 5% by weight being preferred and 2% by weight of the ink or less being particularly preferred.

In a further embodiment of the present invention the ink has a concentration of the latex comprising a polyanion and a polymer or copolymer of a substituted or unsubstituted thiophene of preferably at least 1% by weight of the ink and a water content of preferably less than 12% by weight, more preferably less than 6% by weight, of the ink.

According to a further embodiment of the present invention, the ink may comprise additional ingredients, such as one or more binders, a hardening agent e.g. an epoxysilane, such as 3-glycidoxypropyltrimethoxysilane, as described in EP-A 564 911 which is especially suitable when printing on a glass substrate; one or more additional surfactants; one or more dispersants; spacing particles; adhesion promoting agents, UV-filters or IR-absorbers. Suitable polymer binders are described in EP-A 564 911. The inks according to the present invention may be used for preparing an antistatic or electroconductive layer.

Lithographic inks have viscosities of about 15 mPa.s to 35 Pa.s depending upon the ink formulation, drying mechanism, printing machine and speed of printing. Gravure and flexographic inks vary greatly, but a typical press-ink viscosity is about 15 mPa.s. Typical viscosities of screen printing inks are about 2 Pa.s. Inkjet inks vary in viscosity from about 2 mPa.s to 20 mPa.s depending upon the type of inkjet process, nozzle construction, printing speed, ink-drying mechanism and print quality required. Hot-melt inkjet inks are solid at room temperature and are normally printed at about 150°C, when their viscosity is of the order of 40 mPa.s.

Non-transparent printing inks can be realized by additionally incorporating a pigment such as LEVACRYL® A-SF, a black pigment from BAYER, in a weight sufficient to give non-transparency in the layer thickness being coated.

Layers of the printing inks according to an embodiment of the present invention exhibit excellent adhesion to phosphor layers, polyacrylate subbing layers, polycarbonate and polyesters e.g. poly(ethene terephthalate). In embodiments, their surface resistances is 1000 Ω/square or less. In embodiments, their visible light transmissions is > 75%, with ≥ 85% being obtainable.

### Binder

In a further embodiment of the present invention, the composition further comprises a binder. The binder preferably has a glass transition temperature above 25°C.

In another embodiment of the present invention the coating solution or dispersion further comprises a binder or a thickener.

In yet another embodiment of the present inveniton the printing ink further comprises a binder or thickener.

Suitable binders for use in embodiments of the present invention are described in EP-A 564 911, and include water-soluble polymers, such as poly(vinyl alcohol), water-soluble homo- and co-polymers of acrylic acid and homo- and co-polymers of methacrylic acid, and polymer latexes.

Suitable thickerners comprise polyacrylates and polysaccharides. Preferred polyacrylate thickeners are high molecular weight homo- and copolymers of acrylic acid crosslinked with a polyalkenyl polyether such as the CARBOPOL® resins of B. F. Goodrich with CARBOPOL® ETD-2623 being particularly preferred. Preferred polysaccharide thickeners include cellulose, cellulose derivatives e.g. carboxymethyl cellulose, silica, guar gum and xanthan gum, with xanthan gum being particularly preferred e.g. BIOSAN® S from Hercules Inc., USA and Kelzan® T from MERCK & Co., Kelco Division, USA.

Particularly preferred binders and thickeners for use in the freeze-dried composition, ink or aqueous or organic solvent solution or dispersion, according to the present invention, are shown in Table 4:

**Table 4:**

| | | |
|---|---|---|
| POLYVIOL™WX48 20 | = | a poly(vinyl alcohol) from WACKER CHEMIE |
| CARBOPOL™ ETD2623 | = | an acrylic acid copolymer crosslinked with a polyalkenyl polyether from B. F. Goodrich; |
| CERIDUST™ 130 | = | a polyethylene wax from Hoechst; |
| JONREZ™ SM700 | = | a rosin based resin from Johnson Polymer; |
| JONREZ™ SM705 | = | a rosin based resin from Johnson Polymer; |
| JONREZ™ SM729 | = | a rosin based resin from Johnson Polymer; |
| KLUCEL™ H | = | a hydroxypropylcellulose from Hercules Inc.; |
| NEOCRYL™ BT24 | = | an alkaline-soluble acrylic copolymer from Zenica Resins |

Preferred water-soluble binders include poly(vinyl alcohol) and homo- and co-polymers of hydroxyethyl methacrylate and copolymers of 2-propenoic acid 2-phosphonooxy)ethyl ester and copolymers of 2-methyl-2-propenoic acid 2-phosphonooxy)ethyl ester. Preferred polymer latexes are homo- or co-polymers of a monomer selected from the group consisting of styrene, acrylates, methacrylates and dienes e.g. isoprene and butadiene. Particularly preferred polymer latexes for use in the freeze-dried composition, ink or aqueous or organic solvent solution or dispersion, according to the present invention, are shown in Table 5:

**Table 5:**

| | | |
|---|---|---|
| LATEX01 | = | poly(methyl methacrylate) latex with a particle size of 90nm, available as a 20% by weight aqueous dispersion; |
| LATEX02 | = | Copolyester latex of 26,5 mol% terephthalic acid, 20 mol% isophthalic acid, 3.5 mol% sulfo-isophthalic acid and 50 mol% ethylene glycol, available as a 20% by weight aqueous dispersion; |
| LATEX03 | = | vinylidene chloride, methyl methacrylate, itaconic acid (88/10/2) terpolymer, available as 30% by weight aqueous dispersion; |
| LATEX04 | = | a copolymer of 80% ethyl acrylate and 20% methacrylic acid, available as a 27% by weight aqueous dispersion; |
| LATEX05 | = | a copolymer of 49% methyl methacrylate, 49% of butadiene and 2% itaconic acid, available as a 30% by weight aqueous dispersion; |
| LATEX06 | = | a poly(ethyl acrylate), available as a 30% by weight aqueous dispersion. |

| | | |
|---|---|---|
| LATEX03, LATEX04, LATEX05 and LATEX06 all have glass transition temperatures below 25°C. | | |

Such binders may be treated with a hardening agent, e.g. an epoxysilane such as 3-glycidyloxypropyltrimethoxysilane as described in EP-A 564 911 which is especially suitable when coating on a glass substrate.

### Conductivity enhancing agent

In another embodiment of the present invention the composition may further comprise a conductivity enhancing agent.

In another embodiment of the present invention the aqueous or organic solvent solution or dispersion may further comprise a conductivity enhancing agent.

In yet another embodiment of the present invention the ink further comprises a conductivity enhancing agent.

Suitable conductivity enhancing agents are linear, branched or cyclic aliphatic C₂₋₂₀ hydrocarbon or an unsubstituted or optionally substituted aromatic C₆₋₁₄ hydrocarbon, preferably an unsubstituted or optionally substituted aromatic C_{6, 10 or 14} hydrocarbon, or a pyran or a furan, said conductivity enhancing agent comprising at least two hydroxy groups or at least one -C(=O)-X or -C(=O)-NYZ group, wherein X denotes - OH and Y and Z independently of one another each represent H or alkyl; or a heterocyclic compound containing at least one lactam group.

Preferred examples of such conductivity enhancing agent for use in the freeze-dried composition, ink or aqueous or organic solvent solution or dispersion according to the present invention, are e.g. N-methyl-2-pyrrolidone, 2-pyrrolidone, 1,3-dimethyl-2-imidazolidone, N,N,N',N'-tetramethylurea, formamide, dimethylformamide and N,N-dimethylacetamide. Preferred examples are sugar or sugar derivatives such as arabinose, saccharose, glucose, fructose and lactose, or di- or polyalcohols such as sorbitol, xylitol, mannitol, mannose, galactose, sorbose, gluconic acid, ethylene glycol, di- or tri(ethylene glycol), 1,1,1-trimethylol-propane, 1,3-propanediol, 1-,2-propanediol, 1,5-pentanediol, 1,2,3-propanetriol, 1,2,4-butanetriol, 1,2,6-hexanetriol, or aromatic di- or polyalcohols such as resorcinol.

Particularly preferred conductivity enhancing agents for use in the freeze-dried composition, ink or aqueous or organic solvent solution or dispersion, according to the present invention are: N-methyl-pyrrolidinone and diethylene glycol.

### Support

Suitable supports for use in the method of the present invention are polymeric films such as poly(ethylene terephthalate), poly(ethylene naphthalate), polystyrene, polyethersulphone, polycarbonate, polyacrylate, polyamide, polyimides, cellulosetriacetate, polyolefines and polyvinylchloride. Also inorganic substrates can be used such as silicon, ceramics, oxides, glass, polymeric film reinforced glass and glass/plastic laminates.

### Industrial applicability

The freeze-dried composition according to the present invention can be used in various applications. The dispersions or solutions, printing ink and coated layers obtained therefrom can be used for making electrodes that can be used in various electrical or semiconductor devices.

Preferred applications for the electroconductive layers prepared with dispersions are photovoltaic cells, electroluminescent devices such as organic or inorganic light-emitting diodes, and displays, especially flat panel displays such as LCDs.

The resistivity of the electroconductive layer comprising a polythiophene prepared according to the present invention is sufficiently low to be used as electrode in a device that draws or generates a small current, such as a solar cell. However, devices that may draw a higher current, such as LEDs, may require an electrode wherein the organic electroconductive layer is combined with another layer having a better conductivity, e.g. an ITO layer. Other embodiments are disclosed in EP-A 1 013 413 and EP-A 0 554 588.

It is to be understood that although preferred embodiments, specific constructions and configurations, as well as materials, have been discussed herein for products according to the present invention, various changes or modifications in form and detail may be made without departing from the scope and spirit of this invention. For example, steps may be added or deleted to methods described within the scope of the present invention.

### Examples

### Example 1: Preparation of the PEDOT/PSS/surfactant dispersion

An aqueous dispersion (dispersion 0) of poly(3,4-ethylenedioxythiophene) [PEDOT] and polystyrene sulphonate [PSS] as a polyanion was prepared according to the method described in EP-A-1079397.

The dispersion thus obtained, had a solid content of 1.2% by weight. Dispersions 1 to 13 were obtained by mixing 200g of this aqueous dispersion of PEDOT/PSS with 15% by weight (0.37g) with respect to the PEDOT/PSS of surfactants S1, S2, S3, S4, S5, S6, S7, S8, S9, S10, S11, S12 or S13, respectively, in a 250 ml beaker. Each dispersion was mixed with a magnetic stirrer and eventually heated until there was complete dissolution of the surfactant. The solution was then filtered with a 70 µm silica filter.

### Example 2: Freeze-drying of the PEDOT/PSS/surfactant dispersion

Dispersions 0 to 13 were freeze-dried by a freezing step followed by a sublimation and a desorption step. The freezing step was performed under atmospheric pressure in a bath of ethanol/dry ice and lasted 7 minutes. The sublimation step and the desorption step were carried out at -80°C under high vacuum (0.7 mbar) in a CHRIST BETA2-16 shelf freeze-dryer until all of the water was evaporated (i.e. until the temperature of the shelves was equal to room temperature, i.e. c.a. 48 hours) and the freeze-dried compositions 0B to 13B were obtained.

### Example 3: Extinction measurements

Each of the freeze-dried compositions 0B to 13B were contacted with a mixture of ethanol (95%wt) and water (5%wt) and treated 5 minutes with an Ultra-Turrax set at 11000 rpm; this treatment was followed by a 25 minutes treatment in an ultrasonic bath (generator Vibra-Cell^{™} VC750 at 80% of amplitude) to give the samples 0B-I to 13B-I. Vibra-Cell is a trademark of sonic and materials, Inc.

Extinction measurements were performed on each sample with an AccuSizer CW788. The AccuSizer measures the extinction of a focused laser beam to determine the particle size distribution in a liquid flowing through a detection volume. As a particle flows through a focused laser beam, the beam is blocked by the particle and a decrease in the detected light intensity is related to the size of the particle. By measuring particle sizes for several minutes a complete distribution of the particle sizes in the liquid can be determined. This instrument measures particle sizes from 0.7 microns to 20 microns. The results of the extinction measurement are shown in Table 6.

**Table 6:**

| **Sample** | **Surfactant >** | **5µm** | **> 10µm** |
|---|---|---|---|
| 1B-I | S1 | 433492 | 25006 |
| 5B-I | S5 | NA | NA |
| 8B-I | S8 | NA | NA |
| 6B-I | S6 | NA | NA |
| 3B-I | S3 | 420676 | 52080 |
| 10B-I | S10 | NA | NA |
| 7B-I | S7 | 643552 | 67759 |
| 13B-I | S13 | 864281 | 119211 |
| 2B-I | S2 | 487582 | 69299 |
| 4B-I | S4 | 425947 | 50512 |
| 11B-I | S11 | 781713 | 123879 |
| 0B-I | None | 1486969 | 429387 |

The difference between the reference 0B-I on one hand and the samples 1BI to 13B-I on the other hand is clearly visible for particles larger than 5 µm and for particles larger than 10 µm of which the number of particles/ml has been drastically reduced when a phosphoric acid ester surfactant was present in the freeze-dried composition (sample 1B-I to 13B-I).

### Example 4: Preparation of ethanol-based coating dispersions from 0B-I to 13B-I

Prior to the preparation of the ethanol-based coating dispersions, the samples 0B-I to 13B-I were treated for 20 minutes in an ultrasonic bath (generator Vibra-Cell^{™} VC750 at 80% of amplitude). Ethanol-based coating dispersions 0B-II to 13B-II were then prepared by respectively mixing 29.17 g of treated samples 0B-I to 13B-I with 20.83 g of a solution having the composition shown in Table 7.

**Table 7:**

| | |
|---|---|
| Zonyl® FS0100 (5% in ethanol) | 9.7 g |
| Isopropanol | 47.4 g |
| diethylene glycol | 67.1 g |
| 3-glycidoxypropyltrimethoxysila ne | 3.2 g |
| Ethanol | 290.7 g |

Zonyl® FS0100 is a fluorosurfactant from DuPont^{™} of general formula F(CF₂CF₂)_{y}CH₂CH₂O(CH₂CH₂O)ₓH wherein x = 0 to about 15 and y = 1 to about 7. An ultrasonic treatment was then resumed for each ethanol-based coating dispersion with a Vibra-Cell^{™} VC750 generator (amplitude = 80%) and coating layers were applied from each ethanol-based coating dispersion at 5 minutes intervals. The coatings were then visually examined and complete dispersion was considered to have been realized when no more spots/particles could be observed in the obtained coating. The optical densities (OD) of the coating layers together with the support were measured in transmission with a MacBeth TR924 densitometer with a visible filter.

The surface resistances at room temperature were determined by contacting the outermost layer of the coating layers with parallel electrodes each 45 mm long and 45 mm apart capable of forming line contacts with copper electrodes via silver-filled rubber, the electrodes being separated by a teflon insulator. This enables a direct measurement of the surface resistance to be realized. The results of these tests are shown in Table 8 below:

**Table 8:**

| Sample | surfactant | Time for complete dispersion (minutes) | Surface resistance (Ohm/square) | OD |
|---|---|---|---|---|
| 1B-I | S1 | 15 | 561 | 0.06 |
| 5B-I | S5 | 15 | 529 | 0.06 |
| 8B-I | S8 | 15 | 494 | 0.065 |
| 6B-I | S6 | 15 | 482 | 0.065 |
| 3B-I | S3 | 20 | 650 | 0.06 |
| 10B-I | S10 | 20 | 668 | 0.06 |
| 7B-I | S7 | 30 | 708 | 0.055 |
| 13B-I | S13 | 30 | 647 | 0.06 |
| 2B-I | S2 | 35 | 638 | 0.06 |
| 4B-I | S4 | 35 | 605 | 0.06 |
| 11B-I | S11 | >40 | 800 | 0.06 |
| 0B-I | none | 40 | 780.5 | 0.065 |

Table 8 shows the minimum ultrasonic treatment time needed, after the mixing of the treated samples 0B-I to 13B-I with the solution of Table 7, to obtain spots/particles-free coatings. In most cases, the time needed was shorter when a phosphonic acid ester surfactant was present. Although surfactant S11 was shown to improve the dispersibility of the freeze-dried composition (see Table 6), a positive effect on the ease of obtaining a spots/particles-free coating could not be demonstrated.

### Example 5: Dispersion test with surfactant added after the freeze-drying

A solution was prepared by mixing a mixture of ethanol and water (95%wt/5%wt) and 0.18g of a surfactant (S1, S6, S10 or S5) for 10 min under heating and for 1h without heating. 1.2 g of samples 0B-I was then mixed with this solution and treated with an Ultra Turrax (11000 rpm) for 5 min. This treatment was followed by an ultrasound treatment with a generator Vibra-Cell^{™} VC750 at 80% of amplitude for 40 minutes to lead to mixtures 1B-III, 5B-III, 6B-III and 10B-III, respectively. Ethanol-based coating dispersions 1B-IV, 5B-IV, 6B-IV and 10B-IV were then prepared from the samples 1B-III, 5B-III, 6B-III and 10B-III according to the same procedure as in example 4. An ultrasonic treatment was then resumed for each ethanol-based coating dispersion (Vibra-Cell^{™} VC750, amplitude = 80%) and coating layers were applied from each ethanol-based coating dispersion at 5 minutes intervals. The coatings were then visually examined and complete dispersion was considered to have been realised when no more spots/particles could be observed in the obtained coating. The optical densities (OD) of the coating layers together with the support were measured in transmission with a MacBeth TR924 densitometer with a visible filter.

The surface resistances at room temperature were determined by contacting the outermost layer of the coating layers with parallel electrodes each 45 mm long and 45 mm apart capable of forming line contacts with copper electrodes via silver-filled rubber, the electrodes being separated by a teflon insulator. This enables a direct measurement of the surface resistance to be realized. The results of these tests are shown in Table 9.

**Table 9:**

| Sample | Surfactant (added after freeze-drying) | Time for complete dispersion (minutes) | Surface resistance (Ohm/square) | OD |
|---|---|---|---|---|
| 1B-IV | S1 | 35 | 445.5 | 0.06 |
| 5B-IV | S5 | 40 | 605 | 0.05 |
| 6B-IV | S6 | 40 | 756 | 0.05 |
| 10B-IV | S10 | 35 | 633 | 0.055 |
| 0B-IV | none | 40 | 780.5 | 0.0651 |

From Table 9, it can be seen that adding a phosphonic acid ester surfactant to an aqueous dispersion of PEDOT/PSS after freeze-drying reduces by up to 5 minutes the time necessary to obtain a coating solution leading to a spots/particles-free coating. It can also be concluded from this same table that the Surface resistance and the optical density (OD) of the coating is improved when a a phosphonic acid ester surfactant is added to an aqueous dispersion of PEDOT/PSS after freeze-drying. Nevertheless, incorporating the phosphonic acid ester surfactant to the PEDOT/PSS before freeze-drying allows for even faster preparation of a spots/particles-free coating as demonstrated by example 4.

### Comparative example 1: Preparation of ethanol-based coating dispersions with other surfactants

Dispersions 14 to 23 were obtained by mixing 200g of the aqueous dispersion 0 of PEDOT/PSS with 15% by weight with respect to the PEDOT/PSS of surfactants CS01 to CS10, respectively, in a 250 ml beaker (see Table 10 for more information on the surfactants used and see Table 11 for the details of the preparation of dispersions 14 to 23).

**Table 10:**

| | | |
|---|---|---|
| Comparative Surfactant CS01* | = | AKYPO™ OP80, supplied as an 80% concentrate of an octyl-phenyl-oxy-polyethyleneglycol(EO 8)acetic acid by CHEMY®; |
| Comparative Surfactant CS02* | = | MARLON™ A365, supplied as a 65% concentrate of a sodium alkyl-phenylsulfonate by HÜLS®; |
| Comparative Surfactant CS03* | = | ZONYL™FSO 100, a block copolymer of polyethyleneglycol and polytetrafluoroethene with the structure: F(CF₂CF₂)_{y}CH₂CH₂O(CH₂CH₂O)ₓH, where x = 0 to ca. 15 and y = 1 to ca. 7 from DUPONT®, supplied as a 5 wt.% solution; |
| Comparative Surfactant CS04* | = | SURFINOL™485, an ethoxylated acetylenic diol surfactant from Air Products®. |
| Comparative Surfactant CS05* | = | perfluoro-octanoic acid ammonium salt, available as a 30% solution |
| Comparative | = | ARKOPAL™ N060 (previously HOSTAPAL™ W), a |
| Surfactant CS06* | | nonylphenylpolyethylene-glycol from HOECHST®; |
| Comparative Surfactant CS07* | = | HOSTAPAL™ B, a sodium trisalkylphenyl-polyethyleneglycol(EO 7-8)sulphate from HOECHST®, supplied as a 50% concentrate; |
| Comparative Surfactant CS08* | = | MERSOLAT™H76, a sodium pentadecylsulfonate from BAYER®, supplied as a 76% concentrate; |
| Comparative Surfactant CS09 | = | Pluronics™ P104, a triblock polyethyleneoxide-polypropyleneoxide-polyethyleneoxide copolymer having 40 % of ethylene oxide groups and a Mw of 3000 for the polypropyleneoxide group |
| Comparative Surfactant CS10 | = | Lutensol™ T08, a polyethyleneglycol (EO 8) adduct of oxoalcohol containing 13 carbon atoms from BASF®. |

| | | |
|---|---|---|
| *exemplified in WO 02/00759A | | |

The dispersion was mixed with a magnetic stirrer for 30 min. The solution was then filtered with a 70 µm silica filter. Dispersions 14 to 23 were freeze-dried by a freezing step followed by a sublimation step. The freezing step was performed under atmospheric pressure in a bath of ethanol/dry ice and lasted 7 minutes. The sublimation step and the desorption step were carried out at -80°C under high vacuum (0.7 mbar) in a CHRIST BETA2-16 shelf freeze-dryer until all of the water was evaporated (i.e. until the temperature of the shelves was equal to room temperature, i.e. c.a. 48 hours) and the freeze-dried compositions 14B to 23B were obtained. Freeze-dried compositions 14B to 23B were mixed with aqueous ethanol (5% by weight of water) and treated 5 minutes with an Ultra-Turrax set at 11000 rpm ; this treatment was followed by a 25 minutes treatment in an ultrasonic bath (generator Vibra-Cell™ VC750 at 80% of amplitude) to give the samples 14B-I to 23BI. Ethanol-based coating dispersions 14B-II to 23B-II were then prepared from the samples 14B-I to 23B-I according to the same procedure as in example 4. An ultrasonic treatment was then resumed (amplitude = 80%) for each ethanol-based coating dispersion and coating layers were applied from each ethanol-based coating dispersion at 5 minutes intervals. The coatings were then visually examined and the dispersion was judged to have been completed when no more spots/particles could be observed in the obtained coating. The optical densities (OD) of the coating layers together with the support were measured in transmission with a MacBeth TR924 densitometer with a visible filter.

The surface resistances at room temperature were determined by contacting the outermost layer of the coating layers with parallel electrodes each 45 mm long and 45 mm apart capable of forming line contacts with copper electrodes via silver-filled rubber, the electrodes being separated by a teflon insulator. This enables a direct measurement of the surface resistance to be realized. The results of these tests are shown in Table 11 below:

**Table 11:**

| Solution | Surfact. | %wt of surfact. in the surfact. solution | Weight of surfact. solution (g) | %wt of surfact. in respect of the PEDOT/PSS present | Time for complete dispersion (minutes ) | Surface resistance (Ohm/square) | OD |
|---|---|---|---|---|---|---|---|
| 14B-I | CS01 | 4.7 in water | 7.9 | 15 | 40 | 638.5 | 0.07 |
| 15B-I | CS02 | 10.2 in water | 3.6 | 15 | Infinite (stays hazy) | NA | NA |
| 16B-I | CS03 | 5 in water | 7.4 | 15 | >40 | 548.5 | 0.07 |
| 17B-I | CS04 | 100 | 0.37 | 15 | 40 | 667 | 0.07 |
| 18B-I | CS05 | 5 in water | 7.4 | 15 | NA | NA | NA |
| 19B-I | CS06 | 20 in water/ ethanol (1/1) | 1.85 | 15 | 40 | 768 | 0.06 |
| 20B-I | CS07 | 10 in water | 3.7 | 15 | >40 | 518.5 | 0.07 |
| 21B-I | CS08 | 19 in water | 1.95 | 15 | Infinite (stays hazy) | NA | NA |
| 22B-I | CS09 | NA | NA | 15 | Infinite (stays hazy) | NA | NA |
| 23B-I | CS10 | NA | NA | 15 | Infinite (stays hazy) | NA | NA |
| 0B-I | none | NA | NA | 0 | 40 | 780.5 | 0.065 |

In Table 11, "surfact." stands for surfactant. Table 11 shows the minimum ultrasonic treatment time needed, after the mixing of the treated samples 14B-I to 21B-I with the solution of Table 7, to obtain spots/particles-free coatings. A positive effect on the ease of obtaining a spots/particles-free coating could not be demonstrated for any of the non- phosphonic acid ester surfactant used. Composition 18B was not dry after the described freeze-drying procedure. For several solutions, even a negative effect was observed on the ease of obtaining a spots/particles-free coating.

The present invention may include any feature or combination of features disclosed herein either implicitly or explicitly or any generalisation thereof irrespective of whether it relates to the presently claimed invention. In view of the foregoing description it will be evident to a person skilled in the art that various modifications may be made within the scope of the invention.

## Claims

1. A freeze-dried composition comprising:
- a polyanion,
- a polymer or copolymer of a substituted or unsubstituted thiophene, and
- a surfactant,
wherein said surfactant comprises a mono- or diesterified phosphoric acid or a mixture thereof, or a partially neutralized salt thereof.

2. The freeze-dried composition of claim 1, wherein said mono- or diesterified phosphoric acid is a compound of the general formula (III), 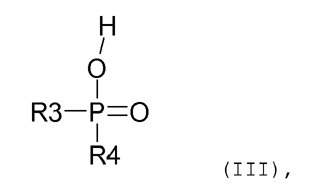 wherein
R3 is a hydroxy group or -(OCH₂)ₙOR5,
R4 is a hydroxy group or -(OCH₂)ₘOR6,
n is 0,1, 2, 3, 4, 5, 6, 7, 8, 9, 10, 11, 12, 13, 14, 15, 16, 17, 18, 19 or 20,
m is 0,1, 2, 3, 4, 5, 6, 7, 8, 9, 10, 11, 12, 13, 14, 15, 16, 17, 18, 19 or 20,
R5 and R6 are each independently of one another a hydrocarbon group, unsubstituted or substituted, branched or linear, cyclic, non-cyclic or heterocyclic, saturated or unsaturated, aromatic, non-aromatic, heteroaromatic comprising 8, 9, 10, 11, 12, 13, 14, 15, 16, 17, 18, 19, 20, 21, 22, 23, 24, 25, 26, 27, 28, 29 or 30 carbon atoms,
with the proviso that both R3 and R4 are not hydroxy groups simultaneously.

3. A freeze-dried composition according to claim 2, wherein R5 and R6 are each independently of one another a hydrocarbon group selected from the group consisting of octyl, 2-ethylhexyl, secondary octyl, nonyl, secondary nonyl, decyl, secondary decyl, undecyl, secondary undecyl, dodecyl, secondary dodecyl, tridecyl, isotridecyl, secondary tridecyl, tetradecyl, secondary tetradecyl, hexadecyl, lauryl, dilauryl, secondary hexadecyl, stearyl, icosyl, docosyl, tetracosyl, triacontyl, 2-butyloctyl, 2-butyldecyl, 2-hexyloctyl, 2-hexyldecyl, 2-octyldecyl, 2-hexyldodecyl, 2-octyldodecyl, 2-decyltetradecyl, 2-dodecylhexadecyl, 2-hexadecyloctadecyl, 2-tetradecyloctadecyl, monomethyl branched-isostearyl, nonylphenyl and tristyrylphenyl.

4. A freeze-dried composition according to any previous claims,
wherein said mono- or diesterified phosphoric acid or mixture thereof is selected from the group consisting of
mono- and di-[tallowyl polyglycolether (6 EO)]phosphate as well as mixtures thereof (S1), mono- and di-[oleyl polyglycolether (7 EO)]phosphate as well as mixtures thereof (S2), mono- and di-[isotridecyl polyglycolether (3 EO)]phosphate as well as mixtures thereof (S7), mono- and dilauryl phophate as well as mixtures thereof (S6), mono- and ditridecyl phosphate as well as mixtures thereof, mono- and ditetradecyl phosphate as well as mixtures thereof, mono- and di-2-ethylhexyl ester phosphate as well as mixtures thereof (S12), mono- and di-[isotridecyl polyglycolether (20 EO)]phosphate as well as mixtures thereof (S3), mono- and di-[isotridecyl polyglycolether (9 EO)]phosphate as well as mixtures thereof (S4), mono- and di-[icosyl polyglycolether (12 EO)]phosphate as well as mixtures thereof (S5), mono- and di-[henicosyl polyglycolether (12 EO)]phosphate as well as mixtures thereof, mono- and di-[docosyl polyglycolether (12 EO)]phosphate as well as mixtures thereof, mono- and di-[tallowyl polyglycolether (11 EO)]phosphate as well as mixtures thereof (S8), mono- and di-isotridecyl phophate as well as mixtures thereof (S9), mono- and di-[nonylphenyl polyglycolether (9 EO)]phosphate as well as mixtures thereof (S10), mono- and di-[tristyrylphenyl polyglycolether (14 EO)]phosphate as well as mixtures thereof (S11), mono- and di-[2-ethylhexyl polyglycolether (3 EO)]phosphate as well as mixtures thereof (S13).

5. A freeze-dried composition according to any previous claims,
wherein the surfactant is solid at 20°C.

6. A freeze-dried composition according to any previous claims wherein the polyanion is poly(styrenesulfonate).

7. A freeze-dried composition according to any previous claims wherein the polymer or copolymer of a substituted or unsubstituted thiophene is poly(3,4-ethylenedioxythiophene).

8. A freeze-dried composition according to any previous claims wherein said freeze-dried composition is present in form of a powder, a concentrated dispersion or a paste.

9. An aqueous or organic solvent solution or dispersion comprising a freeze-dried composition according to any of claims 1 to 8 and an aqueous or organic solvent.

10. An aqueous or organic solvent solution or dispersion according to claim 9 wherein said aqueous or organic solvent is selected from the group consisting of water, ethyl acetate, methyl ethyl ketone, ethanol, toluene and mixtures thereof.

11. A method for making an aqueous or organic solvent solution or dispersion according to claim 9 or 10 comprising the step of adding an aqueous or organic solvent to a freeze-dried composition according to any of claims 1 to 8.

12. A method for making an antistatic or electroconductive layer or pattern comprising the steps of:
- obtaining an aqueous or organic solvent solution or dispersion according to claim 9 or claim 10, and
- applying the solution or dispersion to an object.

13. Use of an aqueous or solvent solution or dispersion according to claim 9or claim 10for preparing an antistatic or electroconductive layer.

14. An ink comprising a freeze-dried composition according to any of claims 1 to 8.

15. Use of an ink according to claim 14, for preparing an antistatic or electroconductive layer.

16. Use of a surfactant in the preparation of a freeze-dried composition according to any of claims 1 to 8, wherein said surfactant comprises a mono- or diesterified phosphoric acid or a mixture thereof, or a partially neutralized salt thereof.

17. Use of a surfactant for dispersing a freeze-dried polymer or copolymer of a substituted or unsubstituted thiophene, wherein said surfactant comprises a mono- or diesterified phosphoric acid or a mixture thereof or a partially neutralized salt thereof.
